# EUROPÄISCHE PATENTSCHRIFT

(11) **EP 3 536 917 B1**
(45) Veröffentlichungstag und Bekanntmachung des Hinweises auf die Patenterteilung: **07.06.2023**
(21) Anmeldenummer: 19156121.6
(22) Anmeldetag: 08.02.2019
(51) Int. Cl.: F01L 13/06, F02D 13/04, F01L 1/18, F01L 1/46, F01L 13/00, F02D 13/02

(54) **VARIABLER VENTILTRIEB MIT SCHIEBENOCKENSYSTEM FÜR EINE BRENNKRAFTMASCHINE**
VARIABLE VALVE DRIVE WITH SLIDING CAM SYSTEM FOR A COMBUSTION ENGINE
MÉCANISME DE SOUPAPES VARIABLE POURVU DE SYSTÈME DE CAMES COULISSANTES POUR UN MOTEUR À COMBUSTION INTERNE

(30) Priorität: 08.03.2018 DE 102018105359
(43) Veröffentlichungstag der Anmeldung: 11.09.2019
(73) Patentinhaber: MAN Truck & Bus SE, 80995 München (DE)
(72) Erfinder: Malischewski, Thomas, 91560 Heilsbronn (DE); Hirschmann, Steffen, 91413 Neustadt an der Aisch (DE); Hyna, Dominic, 90763 Fürth (DE)
(74) Vertreter: v. Bezold & Partner Patentanwälte - PartG mbB

(56) Entgegenhaltungen:
- WO-A1-2012/038191
- WO-A1-2012/038195
- WO-A1-2017/174353
- DE-A1-102009 015 639
- DE-A1-102011 052 912
- DE-A1-102015 106 978

## Beschreibung

Die Erfindung betrifft eine Brennkraftmaschine aufweisend einen variablen Ventiltrieb mit einem Schiebenockensystem.

Im Stand der Technik sind Schiebenockensysteme bekannt, bei denen in Abhängigkeit von einer Axialposition eines Nockenträgers verschiedene Nocken des Nockenträgers in Wirkverbindung mit einem Gaswechselventil gesetzt werden können.

Aus der DE 10 2015 008722 A1 ist ein innermotorischer Heizbetrieb durch Lasterhöhung bekannt, der mittels einer Nockenkonturvorrichtung durch Umschaltung auf einen anderen Nocken eingestellt werden kann.

Aus der DE 10 2011 052912 A1 ist beispielsweise ein Schiebenockensystem bekannt. Das Schiebenockensystem weist einen Schiebenocken bzw. Nockenträger auf, der für zwei Einlassventile jeweils drei Nockenbahnen bzw. Nockenkonturen aufweist.

Die WO 2012/038191 A1 betrifft eine Viertakt-Brennkraftmaschine mit einer Motorbremse, mit zumindest einem über eine Nockenwelle und zumindest eine Ventilhebelanordnung betätigten Auslassventil pro Zylinder, sowie mit einer Einrichtung zur Vorverstellung der Auslasssteuerung, wobei die Ventilhebelanordnung einen durch einen Auslassnocken betätigten Auslasshebel und einen durch einen Bremsnocken betätigbaren Bremshebel aufweist. Um auf möglichst einfache Weise und mit geringem Bauraum eine Motorbremse mit verdoppelten Bremsphasen zu realisieren, ist vorgesehen, dass der Bremshebel über ein zwischen Bremshebel und Bremsnocken angeordnetes schaltbares erstes Übertragungsglied betätigbar ist, wobei der Bremshebel in einer ersten Stellung des ersten Übertragungsgliedes aktiviert und in einer zweiten Stellung des ersten Übertragungsgliedes deaktiviert ist.

Die DE 10 2009 015 639 A1 betrifft eine Brennkraftmaschine mit mehreren Zylindern, denen jeweils zumindest ein Auslassventil und ein erstes Einlassventil und ein zweites Einlassventil zugeordnet sind, mit einem variablen Einlassventiltrieb zum Betätigen der Einlassventile und zum Verstellen von Ventilhüben und Ventilsteuerzeiten der Einlassventile und mit einem variablen Auslassventiltrieb zum Betätigen der Auslassventile und zum Verstellen von Ventilhüben und Ventilsteuerzeiten der Auslassventile. Es können verschiedenen Zylindern unterschiedlich große Auslassventilhübe zugeordnet werden.

Nachteilig am bekannten Stand der Technik kann sein, dass für jeden gewünschten Motorbetrieb ein separater Nocken bzw. eine separate Nockenbahn am Nockenträger vorgesehen ist. Eine Umschaltung zwischen mehr als zwei Nockenkonturen für ein Ventil kann aufwendig in der konstruktiven Realisierung und Steuerung sein.

Gemäß allgemeineren Aspekten liegt der Erfindung die Aufgabe zu Grunde, eine Brennkraftmaschine aufweisend einen alternativen und/oder verbesserten variablen Ventiltrieb vorzusehen, mit dem Nachteile im Stand der Technik überwunden werden können. Insbesondere soll eine erweiterte Funktionalität des variablen Ventiltriebs ohne Vergrößerung einer Anzahl von Nocken eines Nockenträgers eines Schiebenockensystems ermöglicht werden.

Gemäß einem spezielleren Aspekt liegt der Erfindung die Aufgabe zu Grunde, eine Brennkraftmaschine aufweisend einen alternativen und/oder verbesserten variablen Ventiltrieb zu schaffen.

Die Aufgaben werden gelöst durch die Merkmale gemäß dem unabhängigen Anspruch. Vorteilhafte Weiterbildungen sind in den abhängigen Ansprüchen und der Beschreibung angegeben.

Der variable Ventiltrieb ist für eine Brennkraftmaschine mit einem ersten Gaswechselventil, insbesondere Auslassventil, und einem zweiten Gaswechselventil (z. B. vom gleichen Typ (Ein- oder Auslassventil) wie das erste Gaswechselventil), insbesondere Auslassventil, geeignet. Der variable Ventiltrieb umfasst ein Schiebenockensystem. Das Schiebenockensystem weist einen axial verschiebbaren Nockenträger (zum Beispiel axial verschiebbar auf einer Welle und/oder drehfest auf der Welle angeordnet) auf. Der Nockenträger weist für das erste Gaswechselventil einen ersten Nocken und einen dazu axial versetzen zweiten Nocken (zum Beispiel direkt axial angrenzend) auf. Der Nockenträger weist für das zweite Gaswechselventil einen dritten Nocken und einen dazu axial versetzen vierten Nocken (zum Beispiel direkt axial angrenzend) auf. Abhängig von einer Axialposition des Nockenträgers sind entweder der erste Nocken zum Betätigen des ersten Gaswechselventils und (insbesondere gleichzeitig) der dritte Nocken zum Betätigen des zweiten Gaswechselventils oder der zweite Nocken zum Betätigen des ersten Gaswechselventils und (insbesondere gleichzeitig) der vierte Nocken zum Betätigen des zweiten Gaswechselventils positioniert. Mit anderen Worten gesagt, wenn der erste Nocken das erste Gaswechselventil betätigt, dann betätigt auch der dritte Nocken das zweite Gaswechselventil, und wenn der zweite Nocken das erste Gaswechselventil betätigt, dann betätigt auch der vierte Nocken das zweite Gaswechselventil. Der erste Nocken, der zweite Nocken, der dritte Nocken und der vierte Nocken können sich von einem (gedachten) Nullhubnocken unterscheiden (zum Beispiel weisen sie eine Nockenkontur mit mindestens einer Erhebung und/oder Vertiefung auf). Der erste Nocken und der dritte Nocken sind (im Wesentlichen) gleich ausgebildet. Der zweite Nocken und der vierte Nocken sind unterschiedlich ausgebildet.

Gemäß den allgemeineren Aspekten ermöglicht der variable Ventiltrieb, dass der erste Nocken und der dritte Nocken für einen ersten Betriebsmodus, zum Beispiel einen Normalbetriebsmodus, verwendet werden können. Der zweite Nocken und der vierte Nocken sind hingegen unterschiedlich ausgebildet, sodass mit diesen beiden Nocken unterschiedliche Funktionen mit unterschiedlichen Gaswechselventilen insbesondere vom gleichen Typ (Einlassventil oder Auslassventil), realisiert werden können. Die unterschiedlichen Funktionen können beispielsweise vorteilhaft miteinander zusammenwirken oder vollkommen separate Funktionen darstellen.

Gemäß dem speziellen Aspekt ermöglicht der variable Ventiltrieb, dass der zweite Nocken und der vierte Nocken zusammen überlagert einen Motorbremsbetrieb ermöglichen, wobei beispielsweise unterschiedliche Abschnitte des Motorbremsbetrieb auf den zweiten Nocken und den vierten Nocken verteilt sind. Dies hat zur Folge, dass das erste Gaswechselventil einen ersten Abschnitt des Motorbremsbetriebs realisiert, während das zweite Gaswechselventil einen zweiten Abschnitt des Motorbremsbetriebs realisiert.

Zweckmäßig ist ein dem ersten und zweiten Gaswechselventil zugeordneter Zylinder im Motorbremsbetrieb nicht befeuert.

In einem bevorzugten Ausführungsbeispiele weist der variable Ventiltrieb ferner separate Kraftübertragungseinrichtungen (z. B. Stößel, Schlepphebel, Kipphebel) zum Wirkverbinden des ersten Nockens und des zweiten Nockens mit dem ersten Gaswechselventil und zum Wirkverbinden des dritten Nockens und des vierten Nockens mit dem zweiten Gaswechselventil auf. Damit können über die Kraftübertragungseinrichtungen das erste Gaswechselventil und das zweite Gaswechselventil separat voneinander betätigt werden.

Beispielsweise kann der variable Ventiltrieb eine erste Kraftübertragungseinrichtung (z. B. Stö-ßel, Schlepphebel, Kipphebel) aufweisen, mittels der das erste Gaswechselventil abhängig von einer Axialposition des Nockenträgers mit dem ersten Nocken oder dem zweiten Nocken wirkverbindbar ist. Alternativ oder zusätzlich kann der variable Ventiltrieb eine zweite Kraftübertragungseinrichtung (z. B. Stößel, Schlepphebel, Kipphebel) aufweisen, mittels der das zweite Gaswechselventil abhängig von einer Axialposition des Nockenträgers mit dem dritten Nocken oder dem vierten Nocken wirkverbindbar ist. Die erste und zweite Kraftübertragungseinrichtung können separat zueinander vorgesehen sein und/oder nicht in Wirkverbindung miteinander stehen.

In einem Ausführungsbeispiel weist eine erste Kraftübertragungseinrichtung und/oder eine zweite Kraftübertragungseinrichtung eine, insbesondere zuschaltbare, Änderungsvorrichtung zum Verändern einer Übertragung einer Nockenkontur des jeweils wirkverbundenen Nockens auf. Damit besteht beispielsweise die Möglichkeit, einen Hub einer Ventilsteuerkurve zu vergrößern, zu verkleinern und/oder zu verschieben.

In einem besonders bevorzugten Ausführungsbeispiel weist eine erste Kraftübertragungseinrichtung und/oder eine zweite Kraftübertragungseinrichtung eine, insbesondere zuschaltbare, Leerweg-Vorrichtung zur zumindest teilweisen Kompensation, insbesondere vollständigen Kompensation, einer Übertragung einer Nockenkontur des jeweils wirkverbundenen Nockens auf.

Insbesondere kann (beispielsweise lediglich) die erste Kraftübertragungseinrichtung eine Leerweg-Vorrichtung aufweisen. Die Leerweg-Vorrichtung kann dazu ausgebildet sein, eine Nockenkontur des zweiten Nockens, insbesondere vollständig, zu kompensieren.

Zweckmäßig kann die Leerweg-Vorrichtung auf einer Ventilseite oder einer Nockenwellenseite der Kraftübertragungseinrichtung angeordnet sein.

Beispielsweise kann die Leerweg-Vorrichtung einen verschiebbaren Stellkolben aufweisen, dessen Verschiebbarkeit zum Realisieren der Leerweg-Funktionalität beispielsweise hydraulisch sperrbar ist, zum Beispiel durch mindestens einen verschiebbaren Sperrkolben.

Es ist möglich, das die erste Kraftübertragungseinrichtung, die zweite Kraftübertragungseinrichtung, die Änderungsvorrichtung und/oder die Leerweg-Vorrichtung ein hydraulisches Ventilspielausgleichselement 54 aufweisen kann.

In einem weiteren Ausführungsbeispiel sind der erste Nocken und der dritten Nocken als Normalauslassventilnocken ausgebildet. Alternativ oder zusätzlich sind der erste Nocken und der dritte Nocken zum Offenhalten des ersten Gaswechselventils und des zweiten Gaswechselventils während eines Auslasstaktes ausgebildet. Beispielsweise können der erste Nocken und der dritte Nocken das erste Gaswechselventil und das zweite Gaswechselventil während des restlichen Steuerzyklus geschlossen halten.

In einer Ausführungsform ist der zweite Nocken zum Geschlossenhalten und anschließenden Öffnen des ersten Gaswechselventils im Verdichtungstakt zum Bewirken einer Gasdekompression ausgebildet. Das heißt, das erste Gaswechselventil wird im Verdichtungstakt zunächst geschlossen gehalten und anschließend noch im Verdichtungstakt geöffnet. Alternativ oder zusätzlich ist der zweite Nocken zum zumindest zeitweisen Offenhalten des ersten Gaswechselventils im Expansionstakt zum Gasansaugen ausgebildet. Damit kann mittels des zweiten Nockens insbesondere ein erster Abschnitt eines Motorbremsbetriebs am ersten Gaswechselventil realisiert werden, mit einer Gasdekompression im Verdichtungstakt und anschließendem Gasansaugen im Expansionstakt.

In einer weiteren Ausführungsform ist der vierte Nocken zum Geschlossenhalten und anschließenden Öffnen des zweiten Gaswechselventils im Auslasstakt zum Bewirken einer Gasdekompression ausgebildet. Das heißt, das zweite Gaswechselventil wird im Auslasstakt zunächst geschlossen gehalten und anschließend noch im Auslasstakt geöffnet. Damit kann mittels des vierten Nockens ein zweiter Abschnitt eines Motorbremsbetriebs am zweiten Gaswechselventil realisiert werden, mit einer Gasdekompression im Verdichtungstakt. Zusätzlich kann mittels des vierten Nockens ein Abgastemperaturerhöhungsbetrieb am zweiten Gaswechselventil realisiert werden, wenn der Zylinder befeuert ist und eine Nockenkontur des zweite Nockens auf irgendeine Art und Weise, zum Beispiel mittels einer Leerweg-Vorrichtung, kompensiert wird. Die Temperaturerhöhung ergibt sich insbesondere dadurch, dass die Arbeit der Ladungswechselschleife im p-V-Diagramm deutlich erhöht wird.

Zweckmäßig ist ein dem ersten Gaswechselventil und dem zweiten Gaswechselventil zugeordnete Zylinder im Abgastemperaturerhöhungsbetrieb befeuert.

In einer bevorzugten Ausführungsform bewirken der zweite Nocken und der vierte Nocken miteinander überlagert einen Motorbremsbetrieb, insbesondere mit einer ersten Gasdekompression im Verdichtungstakt, einer Gasansaugung im Expansionstakt und/oder einer zweiten Gasdekompression im Auslasstakt.

In einer weiteren bevorzugten Ausführungsform bewirken der vierte Nocken und eine aktivierte Leerweg-Vorrichtung zum, insbesondere vollständigen, Kompensieren einer Nockenkontur des zweiten Nockens einen Abgastemperaturerhöhungsbetrieb, insbesondere mit einer Gasdekompression im Auslasstakt.

In einer Ausführungsvariante ist der vierte Nocken ausgebildet zum Öffnen des zweiten Gaswechselventils (insbesondere einmalig je Steuerzyklus), und zwar im Auslasstakt nach einer ersten Hälfte des Auslasstakts; im Bereich zwischen 120° KW (Kurbelwinkel) vor OT (oberen Totpunkt einer Kolbenbewegung eines Kolbens des Zylinders) und 40° KW vor OT; und/oder im Bereich zwischen 100° KW vor OT und 60° vor OT; und/oder im Bereich zwischen 90° KW vor OT und 70° vor OT; und/oder bei (ungefähr) 80° KW vor OT.

In einer weiteren Ausführungsvariante ist der vierte Nocken ausgebildet zum Offenhalten des zweiten Gaswechselventils (insbesondere einmalig je Steuerzyklus) für weniger als 160° KW, 150° KW, 140° KW und/oder 130° KW; und/oder für mehr als 80° KW, 90° KW, 100° KW und/oder 110° KW; und/oder für (ungefähr) 120° KW.

In einem weiteren Ausführungsbeispiel ist ein durch den vierten Nocken bewirkter (maximaler) Ventilhub kleiner als 50 %, 40 %, 30 % und/oder 25 %; und/oder größer als 5 %, 10 %, 15 % eines (maximalen) Ventilhubs, der von dem dritten Nocken bewirkt wird. Alternativ oder zusätzlich ist der von dem vierten Nocken bewirkte (maximale) Ventilhub kleiner als 5 mm, 4 mm, 3 mm und/oder 2,5 mm; und/oder größer als 0,5 mm, 1 mm, 1,5 mm; und/oder (ungefähr) 2 mm.

In einer Ausführungsform ist ein Schließzeitpunkt des Auslassventils (im Wesentlichen) unverändert verglichen mit einem Normalschießzeitpunkt des Auslassventils (zum Beispiel Schließzeitpunkt im Normalbetrieb, der beispielsweise am Ende des Auslasstaktes bzw. am Anfang des Einlasstaktes liegt), insbesondere gemäß dem ersten Nocken und dem dritten Nocken. Alternativ oder zusätzlich liegt der Schließzeitpunkt des Auslassventils im Bereich des OT (im Auslasstakt), insbesondere zwischen OT und 40° nach OT (im Einlasstakt).

In einer bevorzugten Ausführungsform erfolgt das Betreiben der Brennkraftmaschine im Abgastemperaturerhöhungsbetrieb in einem Schwachlastbereich, insbesondere unterhalb von einer Motordrehzahl von (ungefähr) 1200 U/min und/oder innerhalb eines Motordrehzahlbereichs zwischen (ungefähr) 600 U/min und (ungefähr) 1000 U/min. Insbesondere unter derartigen Schwachlastbedingungen war es bisher schwierig, eine hohe Abgastemperatur beispielsweise zur Regeneration eines Partikelfilters zu erreichen.

In einer Ausführungsvariante wird der Abgastemperaturerhöhungsbetrieb durchgeführt, wenn, insbesondere unmittelbar (zum Beispiel durch Messung) oder mittelbar (zum Beispiel indirekt über die Erfassung von Parameterwerten, Schaltzuständen, Bedingungen oder Betriebszuständen der Brennkraftmaschine), erfasst wird, dass eine aktuelle Abgastemperatur geringer ist als eine gewünschte Abgastemperatur (z. B. 300 °C zum Regenerieren eines Partikelfilters oder 150 °C zum Betrieben eines SCR-Katalysators). Alternativ oder zusätzlich wird erfasst, dass eine aktuelle Abgastemperatur geringer ist als eine Mindestabgastemperatur zum Betreiben eines Abgasnachbehandlungssystems, insbesondere eines SCR-Katalysators, der Brennkraftmaschine und/oder eine Regeneration eines Partikelfilters, insbesondere eines Dieselpartikelfilters, gewünscht (z. B. Ablauf einer vorbestimmten Zeit oder Motorlaufleistung seit letzter Regeneration, Messung einer Partikelanzahl oder dergleichen) ist. Es ist auch möglich, dass erfasst wird, dass die Brennkraftmaschine gestartet wird, insbesondere unter Kaltstartbedingungen. Damit kann der Abgastemperaturerhöhungsbetrieb insbesondere dann durchgeführt werden, wenn tatsächlich eine Erhöhung der Abgastemperatur gewünscht oder erforderlich ist.

In einer weiteren Ausführungsvariante wird der Abgastemperaturerhöhungsbetrieb solange durchgeführt, bis, insbesondere unmittelbar (zum Beispiel durch Messung) oder mittelbar (zum Beispiel indirekt über die Erfassung von Parameterwerten, Schaltzuständen, Bedingungen oder Betriebszuständen der Brennkraftmaschine), erfasst wird, dass eine aktuelle Abgastemperatur größer oder gleich einer gewünschten Abgastemperatur ist. Es ist beispielsweise auch möglich, dass erfasst wird, dass eine aktuelle Abgastemperatur gleich oder größer ist als eine Mindestabgastemperatur zum Betreiben eines Abgasnachbehandlungssystems, insbesondere eines SCR-Katalysators, der Brennkraftmaschine und/oder eine Regeneration eines Partikelfilters, insbesondere eines Dieselpartikelfilters, abgeschlossen ist. Damit kann der Abgastemperaturerhöhungsbetrieb beendet werden, wenn die erhöhte Abgastemperatur nicht länger benötigt wird bzw. die Abgastemperatur hoch genug erhöht wurde.

In einem Ausführungsbeispiel ist der zweite Nocken ausgebildet zum Öffnen des ersten Gaswechselventils (insbesondere einmalig je Steuerzyklus), und zwar im Verdichtungstakt nach einer ersten Hälfte des Verdichtungstaktes; und/oder im Bereich zwischen 120° KW vor OT und 40° KW vor OT; und/oder im Bereich zwischen 100° KW vor OT und 60° vor OT; und/oder im Bereich zwischen 90° KW vor OT und 70° vor OT; und/oder bei (ungefähr) 80° KW vor OT.

In einem weiteren Ausführungsbeispiel ist der zweite Nocken ausgebildet zum Offenhalten des ersten Gaswechselventils (insbesondere einmalig je Steuerzyklus) für weniger als 400° KW, 350° KW, 330° KW und/oder 310° KW; und/oder für mehr als 200° KW, 250° KW, 270° KW und/oder 290° KW; und/oder für (ungefähr) 300° KW.

Die Erfindung ist auch auf ein Kraftfahrzeug, insbesondere ein Nutzfahrzeug (zum Beispiel Omnibus oder Lastkraftwagen), mit einem variablen Ventiltrieb wie hierin offenbart gerichtet.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schemadarstellung eines Zylinders einer Brennkraftmaschine;
- Figur 2: ein beispielhaftes Schiebenockensystem gemäß der vorliegenden Offenbarung;
- Figur 3: eine beispielhafte Änderungsvorrichtung gemäß der vorliegenden Offenbarung;
- Figur 4: eine weitere beispielhafte Änderungsvorrichtung gemäß der vorliegenden Offenbarung;
- Figur 5: ein Steuerdiagramm für Auslassventile in einem Normalbetriebsmodus;
- Figur 6: ein Steuerdiagramm für Auslassventile und Einlassventile in einem Motorbremsmodus mit zugehöriger Zylinderdruckkurve; und
- Figur 7: ein Steuerdiagramm für ein Auslassventil und Einlassventile in einem Abgastemperaturerhöhungsbetriebsmodus mit zugehöriger Zylinderdruckkurve.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

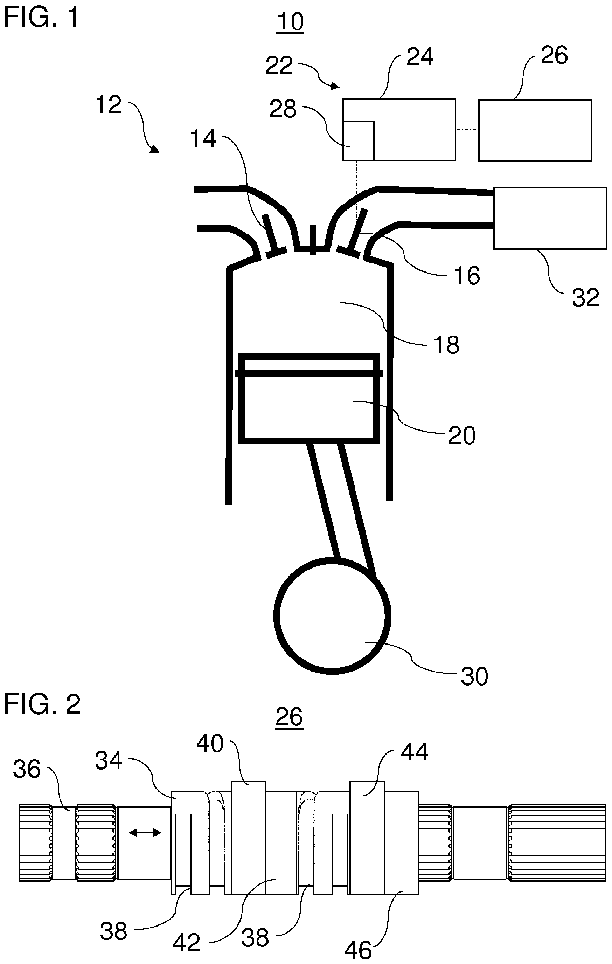

Die Figur 1 zeigt einen Zylinder 12 einer Brennkraftmaschine 10. Die Brennkraftmaschine 10 ist eine Viertakt-Brennkraftmaschine, insbesondere eine Viertakt-Diesel-Brennkraftmaschine oder eine Viertakt-Benzin-Brennkraftmaschine. Vorzugsweise ist die Brennkraftmaschine 10 in einem Nutzfahrzeug, zum Beispiel einem Lastkraftwagen oder einem Omnibus, zum Antreiben des Nutzfahrzeugs umfasst.

Der beispielhafte Zylinder 12 weist zwei Einlassventile 14 (nur eines in Figur 1 dargestellt) und zwei Auslassventile 16 (nur eines in Figur 1 dargestellt) auf. Der Zylinder 12 weist ferner eine Verbrennungskammer 18 und einen Kolben 20 auf. Die Brennkraftmaschine 10 kann eine Mehrzahl von Zylindern 12 aufweisen.

Die Einlassventile 14 verbinden die Verbrennungskammer 18 mit einem Luftzufuhrsystem der Brennkraftmaschine 10 zum Zuführen von Verbrennungsluft in die Verbrennungskammer 18. Die Auslassventile 16 verbinden die Verbrennungskammer 18 mit einem Abgasstrang der Brennkraftmaschine 10 zum Abführen von Abgasen.

Die Auslassventile 16 sind mit einem variablen Ventiltrieb 22 verbunden. Der variable Ventiltrieb 22 weist für jedes Auslassventil 16 eine separate Kraftübertragungseinrichtung 24 (nur eine in Figur 1 dargestellt) auf. Der variable Ventiltrieb 22 weist ferner ein Schiebenockensystem 26 auf. Die Kraftübertragungseinrichtungen 24 können eine Wirkverbindung zwischen dem Schiebenockensystem 26 und den Auslassventilen 16 herstellen. Die Kraftübertragungseinrichtungen 24 können beispielsweise als Stößel, Schlepphebel oder Kipphebel ausgebildet sein. Als Nockenfolger können die Kraftübertragungseinrichtungen 24 beispielsweise jeweils eine Rolle oder einen Gleitschuh aufweisen. Eine der Kraftübertragungseinrichtungen 24 weist eine beispielsweise als Leerweg-Vorrichtung (Lost-Motion-Vorrichtung) ausgebildete Änderungsvorrichtung 28 auf. Die Änderungsvorrichtung 28 dient zum Verändern einer Übertragung einer von der Kraftübertragungseinrichtung 24 abgetasteten bzw. aufgenommenen Nockenkontur auf das Auslassventil 16. Die Änderungsvorrichtung 28 kann an jeder Position in der Kraftübertragungseinrichtung 24 integriert sein. Beispielsweise kann die Änderungsvorrichtung 28 auf einer Ventilseite oder einer Nockenwellenseite der Kraftübertragungseinrichtung 24 integriert sein.

Der Kolben 20 ist auf eine bekannte Art und Weise hin- und herbewegbar in dem Zylinder 12 angeordnet und mit einer Kurbelwelle 30 verbunden.

Im Abgasstrang können eine oder mehrere Abgasnachbehandlungsvorrichtungen 32 angeordnet sein, z. B. ein Partikelfilter, insbesondere ein Dieselpartikelfilter, ein Oxidationskatalysator, insbesondere ein Dieseloxidationskatalysator, und/oder ein SCR-Katalysator (Katalysator zur selektiven katalytischen Reduktion).

In Figur 2 ist ein Ausschnitt eines beispielhaften Schiebenockensystems 26 dargestellt.

Das Schiebenockensystem 26 weist einen Nockenträger (Schiebenocken) 34 auf. Der Nockenträger 34 ist axial verschiebbar und drehfest auf einer (Nocken-) Welle 36 angeordnet. Eine Axialverschiebung des Nockenträgers 34 kann beispielsweise mittels nicht dargestellter Aktuatoren erfolgen, die selektiv in wendelförmige Eingriffsspuren 38 zum Verschieben des Nockenträgers 34 eingreifen können.

Der Nockenträger 34 weist einen ersten Nocken 40, einen zweiten Nocken 42, einen dritten Nocken 44 und einen vierten Nocken 46 auf. In Abhängigkeit von der Axialposition des Nockenträgers 34 betätigt entweder der erste Nocken 40 oder der zweiten Nocken 42 das erste Auslassventil 16 über die entsprechende Kraftübertragungseinrichtung 24 (siehe Figur 1). Ebenso wird das zweite Auslassventil 16 über die entsprechende Kraftübertragungseinrichtung 24 (siehe Figur 1) entweder von dem dritten Nocken 44 oder von dem vierten Nocken 46 betätigt. Die Nocken 40-46 sind so angeordnet, dass entweder der erste Nocken 40 und der dritten Nocken 44 oder der zweite Nocken 42 und der vierten Nocken 46 die Auslassventile 16 (siehe Figur 1) betätigen. Der erste Nocken 40 ist wie der dritten Nocken 44 ausgebildet. Der zweite Nocken 42 unterscheidet sich vom vierten Nocken 44. Alle Nocken 40-46 sind keine Nullhubnocken, das heißt alle Nocken 40, 46 weisen eine Nockenkontur auf, die zu einer Hubbetätigung des entsprechenden Auslassventils 16 führen würden.

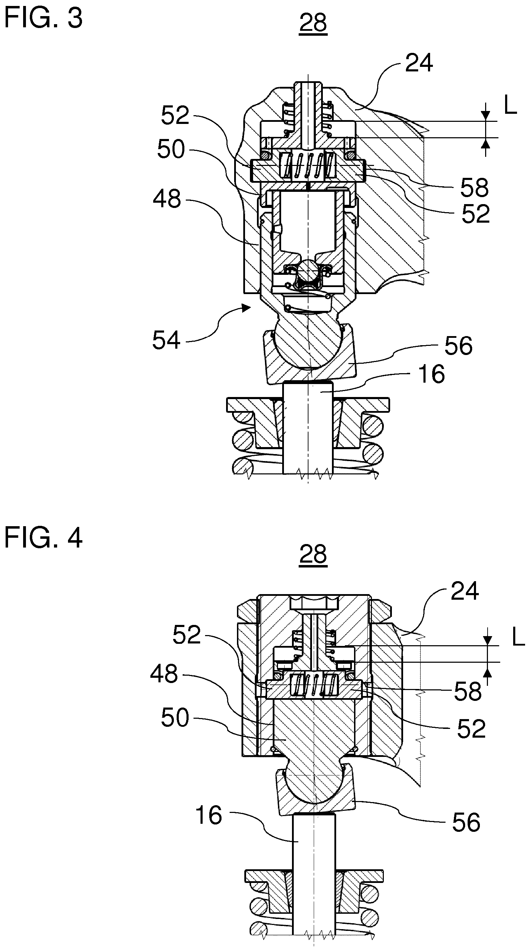

In den Figuren 3 und 4 sind beispielhafte Änderungsvorrichtungen 28 dargestellt.

Unter Bezugnahme auf Figur 3 ist die Änderungsvorrichtung 28 in einer Aufnahme 48 der Kraftübertragungseinrichtung 24 auf dessen Ventilseite integriert. Die Änderungsvorrichtung 28 weist einen Stellkolben 50, zwei Sperrkolben 52, ein hydraulisches Ventilspielausgleichselement 54 und einen Kontaktkörper 56 auf.

Der Stellkolben 50 ist in der Aufnahme 48 axial verschiebbar entlang einer Längsachse der Aufnahme 48 angeordnet. Im Einzelnen ist der Stellkolben 50 zwischen einer ersten Position, wie in Figur 3 dargestellt, und einer zweiten Position axial verschiebbar. In dem in Figur 3 dargestellten Betriebszustand der Änderungsvorrichtung 28 ist eine Verschiebung des Stellkolbens 50 aus der ersten Position in die zweite Position durch die Sperrkolben 52 gesperrt. Es findet keine Änderung einer Übertragung einer von der Kraftübertragungseinrichtung 24 abgetasteten Nockenkontur statt. Der Stellkolben 50 kann in einer Richtung zu der ersten Position axial durch ein elastisches Element vorgespannt sein, wie dargestellt ist.

Die Sperrkolben 52 sind in dem Stellkolben 50 verschiebbar in einer Radialrichtung bezüglich der Längsachse der Aufnahme 48 gelagert und geführt. In der in Figur 3 dargestellten Position sind die Sperrkolben 52 an einem Absatz einer Umfangsnut 58 abgestützt. Diese Abstützung der Sperrkolben 52 bewirkt eine Sperrung der Bewegung des Stellkolbens 50. Ein elastisches Element kann die Sperrkolben 52 gegeneinander in Richtung zu der Umfangsnut 58 abstützen. Die Sperrkolben 52 sind hydraulisch mit einem Steuerfluid beaufschlagbar. Das Steuerfluid kann durch eine Zufuhrleitung (nicht dargestellt), die in die Umfangsnut 58 mündet, zugeführt werden. Eine Zuführung der Steuerfluids bewirkt, dass sich die Sperrkolben 52 aufeinander zu bewegen. Sobald die Sperrkolben 52 nicht mehr an dem Absatz der Umfangsnut 58 abgestützt werden, ist eine Bewegung des Stellkolbens 50 aus der ersten Position in die zweite Position freigegeben (nicht mehr gesperrt).

Damit kann mittels der Änderungsvorrichtung 28 eine Übertragung einer Nockenkontur verändert werden, wenn die Sperrkolben 52 eingefahren sind, das heißt eine Bewegung des Stellkolbens 50 freigegeben ist. Insbesondere kann der Stellkolben 50 einen Leerweg L vollführen, um den eine zu übertragende Nockenkontur während der Übertragung auf das Auslassventil 16 vermindert wird.

Das hydraulische Ventilspielausgleichselement 54 kann wie ein herkömmliches hydraulisches Ventilspielausgleichselement (sog. HVA-Element) ausgebildet sein, sodass deren Funktionsweise zum Ausgleichen eines variablen Spalts zwischen einem Kugelfuß und einer Kugelaufnahme des Kontaktkörpers 56 hierin nicht näher beschrieben ist.

Wie in Figur 4 gezeigt ist, ist es beispielsweise auch möglich, dass die Änderungsvorrichtung 28 ohne ein hydraulisches Ventilspielausgleichselement vorgesehen ist.

Ein Vorteil der in den Figuren 3 und 4 gezeigten Änderungsvorrichtung 28 besteht darin, dass diese zweistufige Varianten darstellen, bei denen die Hydraulikkammer konstruktiv dem Hub oder dem Übersetzungsverhältnis angepasst werden kann, wodurch wiederum das Hydraulikvolumen und die Volumenstrom klein gehalten werden können.

Es ist ferner möglich, dass die Änderungsvorrichtung einen anderen Aufbau und/oder eine andere Anordnung aufweist, solange sie ermöglicht, eine Übertragung einer abgetasteten Nockenkontur zu einem Gaswechselventil zu verändern, insbesondere in Form eines optional zuschaltbaren Leerwegs.

Der das Schiebenockensystem 26 und die Änderungsvorrichtung 28 aufweisende variable Ventiltrieb 22 ermöglicht, die Brennkraftmaschine 10 bzw. deren Auslassventile 16 in drei verschiedenen Betriebsmodi zu steuern. Diese drei Betriebsmodi sind nachfolgend unter Bezugnahme auf die Figuren 1 bis 7 beschrieben.

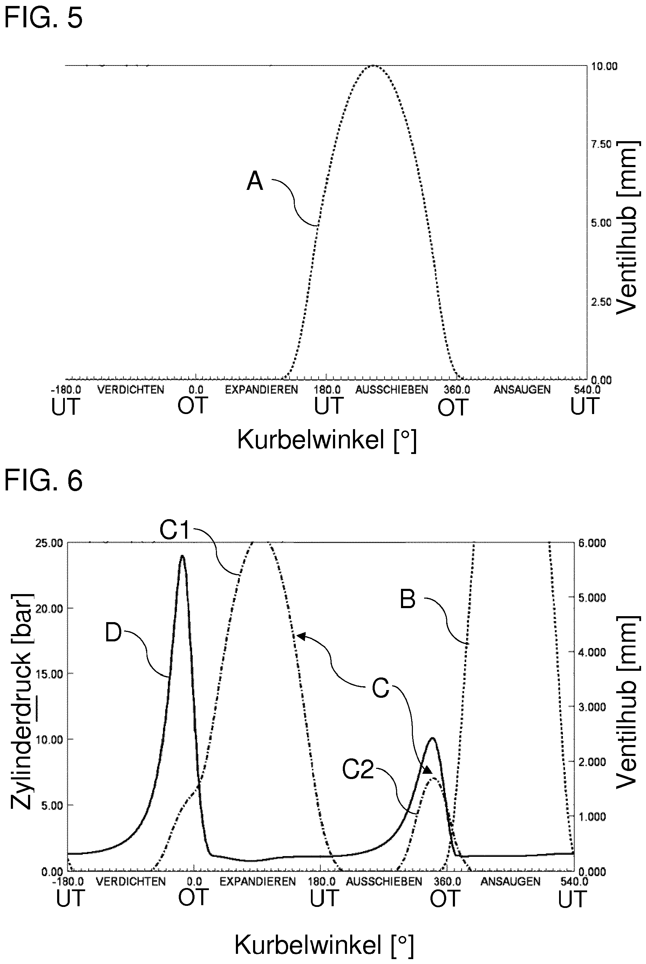

In Figur 5 ist der erste Betriebsmodus hinsichtlich einer Ventilsteuerkurve der Auslassventile 16 dargestellt. Dieser erste Betriebsmodus entspricht einem Normalbetriebsmodus. Im Normalbetriebsmodus werden die Auslassventile 16 so betätigt, dass sie während eines Auslasstaktes geöffnet sind (siehe Ventilsteuerkurve A). Im Einzelnen sind die Nockenkonturen des ersten Nocken 40 und des dritten Nockens 44 entsprechend der Ventilsteuerkurve A ausgebildet. Im Normalbetriebsmodus werden das erste und zweite Auslassventil 16 am Ende eines Expansionstaktes geöffnet und zum Ende eines Auslasstaktes bzw. zu Beginn eines Einlasstaktes geschlossen. Im Normalbetriebsmodus werden die Zylinder 12 der Brennkraftmaschine 10 mit einem Luft-Kraftstoff-Gemisch versorgt, das in den Zylindern 12 gezündet wird.

Der Zylinder 12 kann im Normalbetriebsmodus betrieben werden, wenn der Nockenträger 34 eine Axialposition hat, bei der der erste Nocken 40 und der dritte Nocken 44 in Wirkverbindung mit dem ersten und zweiten Auslassventil 16 stehen. Zusätzlich kann die Änderungsvorrichtung 28 nicht aktiviert sein.

In Figur 6 ist der zweite Betriebsmodus hinsichtlich einer (kombinierten) Ventilsteuerkurve der Auslassventile 16, einer Ventilsteuerkurve der Einlassventile 14 und eines Zylinderdrucks dargestellt. Der zweite Betriebsmodus entspricht einem Motorbremsmodus der Brennkraftmaschine 10. Im Motorbremsmodus ist der entsprechende Zylinder 12 nicht befeuert.

Der Zylinder 12 kann im Motorbremsmodus betrieben werden, wenn der Nockenträger 34 eine Axialposition hat, bei der der zweite Nocken 42 und der vierte Nocken 44 in Wirkverbindung mit dem ersten und zweiten Auslassventil 16 stehen. Zusätzlich kann die Änderungsvorrichtung 28 nicht aktiviert sein.

Im Motorbremsmodus öffnen die Einlassventile 14 wie im Normalbetriebsmodus im Einlasstakt bzw. Ansaugtakt, wie mit der gepunkteten Linie B dargestellt ist. Die mittels einer Strichpunktlinie dargestellte Ventilsteuerkurve C wird auf den zweiten Nocken 42 und den vierten Nocken 46 aufgeteilt. Im Einzelnen weist der zweite Nocken 42 einen Abschnitt C1 der Ventilsteuerkurve C auf. Außerhalb des Abschnitts C1 weist der zweite Nocken 42 insbesondere keine weitere Erhebung auf. Der vierte Nocken 46 weist einen Abschnitt C2 der Ventilsteuerkurve C auf. Außerhalb des Abschnitts C2 weist der vierte Nocken 46 insbesondere keine weitere Erhebung auf. Damit ergibt sich folgende Betätigung für die Auslassventile 16. Das erste Auslassventil 16 wird durch den zweiten Nocken 42 zum Ende des Verdichtungstaktes geöffnet, während des Expansionstaktes weiter geöffnet und schließlich zu Beginn des Auslasstaktes bzw. Ausschiebetaktes geschlossen. Das zweite Auslassventil 16 verbleibt während dieser Zeit mangels einer entsprechenden Erhebung am vierten Nocken 46 geschlossen. Zum Ende des Auslasstaktes öffnet der vierte Nocken 46 gemäß dem Abschnitt C2 das zweite Auslassventil 16 und schließt dieses schließlich wieder zu Beginn des Ansaugtaktes. Während dieser Zeit verbleibt das erste Auslassventil 16 mangels einer entsprechenden Erhebung am zweiten Nocken 42 geschlossen.

Insbesondere wird das erste Auslassventil 16 von dem zweiten Nocken 42 im Bereich zwischen 120° KW vor OT und 40° KW vor OT, insbesondere bei ungefähr 80° vor OT, im Verdichtungstakt geöffnet und dann beispielsweise für ungefähr 300° KW offengehalten. Die Öffnung des ersten Auslassventils 16 durch den zweiten Nocken können zweistufig erfolgen, wie dargestellt ist, um beispielsweise die gewünschte Dekompressionswirkung am Ende des Verdichtungstaktes durch Begrenzen eines Strömungsquerschnitts durch das teilweise geöffnete erste Auslassventil 16 zu erreichen und/oder die Belastung an dem variablen Ventiltrieb 22 aufgrund der Öffnung des ersten Auslassventils 16 gegen den Druck im Zylinder klein zu halten. Im Expansionstakt kann das erste Auslassventil 16 dann weiter als noch im Verdichtungstakt geöffnet werden.

Insbesondere wird das zweite Auslassventil 16 von dem vierten Nocken 46 im Bereich zwischen 120° KW vor OT und 40° KW vor OT, insbesondere bei ungefähr 80° KW vor OT, im Auslasstakt geöffnet und dann beispielsweise für ungefähr 120° KW offengehalten.

Die kombinierte Ventilsteuerkurve C führt zu einer zweifachen Dekompression von verdichtetem Abgas in den Abgastrakt, wodurch sich eine Motorbremswirkung ergibt. Die erste Dekompression ergibt sich am Ende des Verdichtungstaktes durch das geöffnete erste Auslassventil 16, durch das verdichtetes Gas aus der Verbrennungskammer 18 in den Abgastrakt geschoben wird. Während des Expansionstaktes wird Gas aus dem Abgastrakt in die Verbrennungskammer durch das geöffnete erste Auslassventil 16 gesaugt. Die zweite Dekompression ergibt sich am Ende des Auslasstaktes durch das geöffnete zweite Auslassventil 16, durch das verdichtetes Gas aus der Verbrennungskammer 18 den Abgastrakt geschoben wird. Die zweifache Verdichtung mit jeweils anschließender Dekompression ist anschaulich anhand einer Zylinderdruckkurve D, die als durchgezogene Linie dargestellt ist, gezeigt.

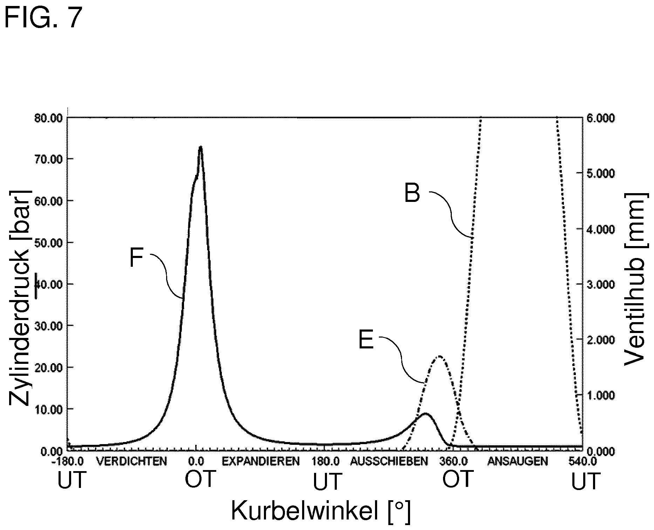

In Figur 7 ist der dritte Betriebsmodus hinsichtlich einer Ventilsteuerkurve des zweiten Auslassventils 16, einer Ventilsteuerkurve der Einlassventile 14 und eines Zylinderdrucks dargestellt. Der dritte Betriebsmodus entspricht einem Abgastemperaturerhöhungsbetriebsmodus des Zylinders 12 der Brennkraftmaschine 10. Im Abgastemperaturerhöhungsbetriebsmodus ist der entsprechende Zylinder 12 befeuert. Der Abgastemperaturerhöhungsbetriebsmodus wird durchgeführt, wenn gewünscht ist, eine Abgastemperatur zu erhöhen.

Der Abgastemperaturerhöhungsbetriebsmodus kann in bestimmten Situationen während des Betriebs der Brennkraftmaschine 10 gewünscht sein. Beispielsweise kann gewünscht sein, einen Partikelfilter zu regenerieren, wozu eine Abgastemperatur zwischen 300 °C und 350 °C erforderlich sein kann. Es ist auch möglich, dass bei einem Kaltstart der Brennkraftmaschine 10 schnell eine Mindestabgastemperatur erreicht werden soll, um einen gewünschten Betrieb eines SCR-Katalysators zu gewährleisten. Insbesondere unterhalb einer Temperatur von 150 °C kann eine Umwandlung von Stickoxiden in einem SCR-Katalysator ungenügend sein. Wird das Kraftfahrzeug zusätzlich unter Schwachlast, zum Beispiel zwischen 600 U/min und 1000 U/min, betrieben, kann ein Abgastemperaturniveau allgemein vergleichsweise gering sein.

Der Zylinder 12 kann im Abgastemperaturerhöhungsbetriebsmodus betrieben werden, wenn der Nockenträger 34 eine Axialposition hat, bei der der zweiten Nocken 42 und der vierte Nocken 46 in Wirkverbindung mit dem ersten und zweiten Auslassventil 16 stehen. Zusätzlich kann die Änderungsvorrichtung 28 aktiviert sein.

Die Aktivierung der Änderungsvorrichtung 28 bewirkt, dass die Erhebung des zweiten Nockens 42, das heißt der Abschnitt C1 aus Figur 6, durch den Leerweg L kompensiert wird. Der zweite Nocken 42 öffnet das erste Auslassventil 16 während eines gesamten Steuerzyklus nicht. Wie durch die Ventilsteuerkurve E (Strichpunktlinie) angegeben ist, wird das zweite Auslassventil 16 durch den vierten Nocken 46 am Ende des Auslasstaktes geöffnet und zu Beginn des Ansaugtaktes wieder geschlossen, entsprechend dem Abschnitt C2 aus Figur 6. Es kann sich beispielsweise ein Zylinderdruckverlauf im befeuerten Zylinder 12 gemäß der Kurve F (durchgezogene Linie) ergeben.

Die Temperaturerhöhung im Abgastemperaturerhöhungsbetriebsmodus ergibt sich daraus, dass die Arbeit der Ladungswechselschleife deutlich erhöht wird. Diese Erhöhung folgt aus der anfänglichen Komprimierung des Abgases im Zylinder 12 im Auslasstakt und der anschließenden Dekomprimierung nahe des OT. Hieraus ergibt sich eine links drehende Schleife (Linksprozess) im p-V Diagramm (Druck p -Volumen V - Diagramm), die negative Arbeit und eine Temperatursteigerung des Abgases erzeugt. Gleichzeitig muss in der Hochdruckschleife die zusätzliche Ladungswechselarbeit kompensiert werden, was zu einer Erhöhung der (Kraftstoff-) Einspritzmenge führt, was ebenfalls zu einem Anstieg der Abgastemperatur führt.

Hierin ist das besonders bevorzugte Ausführungsbeispiel eines variablen Ventiltriebs, der einen Normalbetrieb, einen Motorbremsbetrieb und ein Abgastemperaturerhöhungsbetrieb ermöglicht, beschrieben. Es wird darauf hingewiesen, dass die Möglichkeit der unterschiedlichen Steuerung von Gaswechselventilen insbesondere des gleichen Typs (zum Beispiel Auslassventilen oder Einlassventilen) durch unterschiedlich gestaltete Nocken eines einzigen Nockenträgers auch zur Realisierung von anderen Motorbetriebsmodi eingesetzt werden kann. Somit kann beispielsweise mittels eines ersten Nockens und eines dritten Nockens des Nockenträgers ein Normalbetriebsmodus realisiert werden. Mittels des zweiten Nockens und des vierten Nockens kann ein davon abweichender Betriebsmodus realisiert werden, wobei die entsprechenden Ventile durch den zweiten Nocken und den vierten Nocken unterschiedlich betätigt werden. Die Kombination der Nockenprofile bzw. deren Überlagerung ergibt dann den abweichenden Betriebsmodus. Zusätzlich kann optional eine oder mehrere Änderungsvorrichtungen, wie beispielsweise hierin offenbart, verwendet werden, um eine Nockenkontur beispielsweise des zweiten Nockens und/oder des vierten Nockens zu kompensieren. Dies kann einen oder mehrere weitere andere Betriebsmodi ermöglichen, wie ebenfalls hierin beispielhaft in Form des Abgastemperaturerhöhungsbetriebsmodus offenbart ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich, wie er durch die angehängten Ansprüche definiert ist, fallen.

### Bezugszeichenliste

- 10: Brennkraftmaschine
- 12: Zylinder
- 14: Einlassventil
- 16: Auslassventil
- 18: Verbrennungskammer
- 20: Kolben
- 22: Variabler Ventiltrieb
- 24: Kraftübertragungseinrichtung
- 26: Schiebenockensystem
- 28: Änderungsvorrichtung
- 30: Kurbelwelle
- 32: Abgasnachbehandlungsvorrichtung
- 34: Nockenträger
- 36: Welle
- 38: Eingriffsspur
- 40: Erster Nocken
- 42: Zweiter Nocken
- 44: Dritter Nocken
- 46: Vierter Nocken
- 48: Aufnahme
- 50: Stellkolben
- 52: Sperrkolben
- 54: Hydraulisches Ventilspielausgleichselement
- 56: Kontaktkörper
- 58: Umfangsnut

- A: Auslassventilsteuerkurve (Normalbetriebsmodus)
- B: Einlassventilsteuerkurve
- C: Auslassventilsteuerkurve (Motorbremsmodus)
- C1: Erster Abschnitt
- C2: Zweiter Abschnitt
- D: Zylinderdruckverlauf (Motorbremsmodus)
- E: Auslassventilsteuerkurve (Abgastemperaturerhöhungsbetriebsmodus)
- F: Zylinderdruckverlauf (Abgastemperaturerhöhungsbetriebsmodus)
- L: Leerweg

## Patentansprüche

1. Brennkraftmaschine (10) aufweisend einen variablen Ventiltrieb (22) , ein erstes Gaswechselventil, insbesondere Auslassventil (16), und ein zweites Gaswechselventil, insbesondere Auslassventil (16), wobei der variable Ventiltrieb umfasst:
ein Schiebenockensystem (26) aufweisend:
einen axial verschiebbaren Nockenträger (34), der für das erste Gaswechselventil einen ersten Nocken (40) und einen dazu axial versetzen zweiten Nocken (42) und für das zweite Gaswechselventil einen dritten Nocken (44) und einen dazu axial versetzen vierten Nocken (46) aufweist, wobei:
abhängig von einer Axialposition des Nockenträgers (34) entweder der erste Nocken (40) zum Betätigen des ersten Gaswechselventils und der dritte Nocken (44) zum Betätigen des zweiten Gaswechselventils oder der zweite Nocken (42) zum Betätigen des ersten Gaswechselventils und der vierte Nocken (46) zum Betätigen des zweiten Gaswechselventils positioniert ist;
sich der erste Nocken (40), der zweite Nocken (42), der dritte Nocken (44) und der vierte Nocken (46) von einem Nullhubnocken unterscheiden;
der erste Nocken (40) und der dritte Nocken (44) gleich ausgebildet sind; und
der zweite Nocken (42) und der vierte Nocken (46) unterschiedlich ausgebildet sind.

2. Brennkraftmaschine (10) nach Anspruch 1, ferner aufweisend:
separate Kraftübertragungseinrichtungen (24), zum Wirkverbinden des ersten Nockens (40) und des zweiten Nockens (42) mit dem ersten Gaswechselventil und zum Wirkverbinden des dritten Nockens (44) und des vierten Nockens (46) mit dem zweiten Gaswechselventil.

3. Brennkraftmaschine (10) nach Anspruch 1 oder Anspruch 2, wobei:
eine erste Kraftübertragungseinrichtung (24) und/oder eine zweite Kraftübertragungseinrichtung (24) eine, insbesondere zuschaltbare, Änderungsvorrichtung (28) zum Verändern einer Übertragung einer Nockenkontur des jeweils wirkverbundenen Nockens aufweist.

4. Brennkraftmaschine (10) nach einem der vorherigen Ansprüche, wobei:
eine erste Kraftübertragungseinrichtung (24) und/oder eine zweite Kraftübertragungseinrichtung (24) eine, insbesondere zuschaltbare, Leerweg-Vorrichtung (28) zur zumindest teilweisen Kompensation, insbesondere vollständigen Kompensation, einer Übertragung einer Nockenkontur des jeweils wirkverbundenen Nockens aufweist.

5. Brennkraftmaschine (10) nach einem der vorherigen Ansprüche, wobei:
der erste Nocken (40) und der dritten Nocken (44) als Normalauslassventilnocken ausgebildet sind; und/oder
der erste Nocken (40) und der dritte Nocken (44) zum Offenhalten des ersten Gaswechselventils und des zweiten Gaswechselventils während eines Auslasstaktes ausgebildet sind.

6. Brennkraftmaschine (10) nach einem der vorherigen Ansprüche, wobei
der zweite Nocken (42) zum Geschlossenhalten und anschließenden Öffnen des ersten Gaswechselventils im Verdichtungstakt zum Bewirken einer Gasdekompression ausgebildet ist.

7. Brennkraftmaschine (10) nach einem der vorherigen Ansprüche, wobei
der zweite Nocken (42) zum zumindest zeitweisen Offenhalten des ersten Gaswechselventils im Expansionstakt zum Gasansaugen ausgebildet ist.

8. Brennkraftmaschine (10) nach einem der vorherigen Ansprüche, wobei
der vierte Nocken (46) zum Geschlossenhalten und anschließenden Öffnen des zweiten Gaswechselventils im Auslasstakt zum Bewirken einer Gasdekompression ausgebildet ist.

9. Brennkraftmaschine (10) nach einem der vorherigen Ansprüche, wobei:
der zweite Nocken (42) und der vierte Nocken (46) miteinander überlagert einen Motorbremsbetrieb bewirken, insbesondere mit einer ersten Gasdekompression im Verdichtungstakt, einer Gasansaugung im Expansionstakt und/oder einer zweiten Gasdekompression im Auslasstakt.

10. Brennkraftmaschine (10) nach einem der vorherigen Ansprüche, wobei:
der vierte Nocken (46) und eine aktivierte Leerweg-Vorrichtung (28) zum, insbesondere vollständigen, Kompensieren einer Nockenkontur des zweiten Nockens (42) einen Abgastemperaturerhöhungsbetrieb bewirken, insbesondere mit einer Gasdekompression im Auslasstakt.

11. Brennkraftmaschine (10) nach einem der vorherigen Ansprüche, wobei der vierte Nocken (46) ausgebildet ist zum Öffnen des zweiten Gaswechselventils, und zwar im Auslasstakt:
nach einer ersten Hälfte des Auslasstakts; und/oder
im Bereich zwischen 120° KW vor OT und 40° KW vor OT; und/oder
im Bereich zwischen 100° KW vor OT und 60° vor OT; und/oder
im Bereich zwischen 90° KW vor OT und 70° vor OT; und/oder
bei 80° KW vor OT.

12. Brennkraftmaschine (10) nach einem der vorherigen Ansprüche, wobei der vierte Nocken (46) ausgebildet ist zum Offenhalten des zweiten Gaswechselventils:
für weniger als 160° KW, 150° KW, 140° KW und/oder 130° KW; und/oder
für mehr als 80° KW, 90° KW, 100° KW und/oder 110° KW; und/oder
für 120° KW.

13. Brennkraftmaschine (10) nach einem der vorherigen Ansprüche, wobei der zweite Nocken (42) ausgebildet ist zum Öffnen des ersten Gaswechselventils, und zwar im Verdichtungstakt:
nach einer ersten Hälfte des Verdichtungstaktes; und/oder
im Bereich zwischen 120° KW vor OT und 40° KW vor OT; und/oder
im Bereich zwischen 100° KW vor OT und 60° vor OT; und/oder
im Bereich zwischen 90° KW vor OT und 70° vor OT; und/oder
bei 80° KW vor OT.

14. Brennkraftmaschine (10) nach einem der vorherigen Ansprüche, wobei der zweite Nocken (42) ausgebildet ist zum Offenhalten des ersten Gaswechselventils:
für weniger als 400° KW, 350° KW, 330° KW und/oder 310° KW; und/oder
für mehr als 200° KW, 250° KW, 270° KW und/oder 290° KW; und/oder
für 300° KW.

15. Kraftfahrzeug, insbesondere Nutzfahrzeug, mit einer Brennkraftmaschine (10) nach einem der vorherigen Ansprüche.

## Claims

1. An internal combustion engine (10) having a variable valve drive (22), a first gas exchange valve, in particular outlet valve (16), and a second gas exchange valve, in particular outlet valve (16), wherein the variable valve drive comprises:
a sliding cam system (26) having:
an axially displaceable cam carrier (34) which, for the first gas exchange valve, has a first cam (40) and a second cam (42) offset axially with respect thereto, and, for the second gas exchange valve, has a third cam (44) and a fourth cam (46) offset axially with respect thereto, wherein:
depending on an axial position of the cam carrier (34) either the first cam (40) is positioned for actuating the first gas exchange valve and the third cam (44) is positioned for actuating the second gas exchange valve or the second cam (42) is positioned for actuating the first gas exchange valve and the fourth cam (46) is positioned for actuating the second gas exchange valve;
the first cam (40), the second cam (42), the third cam (44) and the fourth cam (46) differ from a zero lift cam;
the first cam (40) and the third cam (44) are identical in design; and
the second cam (42) and the fourth cam (46) differ in design.

2. The internal combustion engine (10) according to Claim 1, furthermore comprising:
separate force transmission devices (24), for operative connection of the first cam (40) and of the second cam (42) to the first gas exchange valve and for operative connection of the third cam (44) and of the fourth cam (46) to the second gas exchange valve.

3. The internal combustion engine (10) according to Claim 1 or Claim 2, wherein:
a first force transmission device (24) and/or a second force transmission device (24) have/has a changing device (28), which in particular can be switched on, for changing a transmission of a cam contour of the respectively operatively connected cam.

4. The internal combustion engine (10) according to one of the preceding claims, wherein:
a first force transmission device (24) and/or a second force transmission device (24) have/has a lost motion device (28), which in particular can be switched on, for at least partially compensating, in particular completely compensating, for a transmission of a cam contour of the respectively operatively connected cam.

5. The internal combustion engine (10) according to one of the preceding claims, wherein:
the first cam (40) and the third cam (44) are designed as normal outlet valve cams; and/or
the first cam (40) and the third cam (44) are designed for keeping the first gas exchange valve and the second gas exchange valve open during an outlet stroke.

6. The internal combustion engine (10) according to one of the preceding claims, wherein
the second cam (42) is designed for keeping the first gas exchange valve closed and subsequently opening same in the compression stroke in order to bring about gas decompression.

7. The internal combustion engine (10) according to one of the preceding claims, wherein
the second cam (42) is designed for at least temporarily keeping the first gas exchange valve open in the expansion stroke in order to intake gas.

8. The internal combustion engine (10) according to one of the preceding claims, wherein
the fourth cam (46) is designed for keeping the second gas exchange valve closed and subsequently opening same in the outlet stroke in order to bring about gas decompression.

9. The internal combustion engine (10) according to one of the preceding claims, wherein:
the second cam (42) and the fourth cam (46) when combined together bring about an engine braking mode, in particular with a first gas decompression in the compression stroke, gas intake in the expansion stroke and/or a second gas decompression in the outlet stroke.

10. The internal combustion engine (10) according to one of the preceding claims, wherein:
the fourth cam (46) and an activated lost motion device (28) for, in particular completely, compensating for a cam contour of the second cam (42) bring about an exhaust gas temperature increasing mode, in particular with gas decompression in the outlet stroke.

11. The internal combustion engine (10) according to one of the preceding claims, wherein the fourth cam (46) is designed for opening the second gas exchange valve, specifically in the outlet stroke:
after a first half of the outlet stroke; and/or
in the range of between 120° crank angle before TDC and 40° crank angle before TDC; and/or
in the range of between 100° crank angle before TDC and 60° before TDC; and/or
in the range of between 90° crank angle before TDC and 70° before TDC; and/or
at 80° crank angle before TDC.

12. The internal combustion engine (10) according to one of the preceding claims, wherein the fourth cam (46) is designed for keeping the second gas exchange valve open:
for less than 160° crank angle, 150° crank angle, 140° crank angle and/or 130° crank angle; and/or
for more than 80° crank angle, 90° crank angle, 100° crank angle and/or 110° crank angle; and/or
for 120° crank angle.

13. The internal combustion engine (10) according to one of the preceding claims, wherein the second cam (42) is designed for opening the first gas exchange valve, specifically in the compression stroke:
after a first half of the compression stroke; and/or
in the range of between 120° crank angle before TDC and 40° crank angle before TDC; and/or
in the range of between 100° crank angle before TDC and 60° before TDC; and/or
in the range of between 90° crank angle before TDC and 70° before TDC; and/or
at 80° crank angle before TDC.

14. The internal combustion engine (10) according to one of the preceding claims, wherein the second cam (42) is designed for keeping the first gas exchange valve open:
for less than 400° crank angle, 350° crank angle, 330° crank angle and/or 310° crank angle; and/or
for more than 200° crank angle, 250° crank angle, 270° crank angle and/or 290° crank angle; and/or
for 300° crank angle.

15. A motor vehicle, in particular utility vehicle, with an internal combustion engine (10) according to one of the preceding claims.

## Revendications

1. Moteur à combustion interne (10) présentant un mécanisme de commande de soupapes variable (22), une première soupape d'échange de gaz, notamment une soupape d'échappement (16), et une deuxième soupape d'échange de gaz, notamment une soupape d'échappement (16), le mécanisme de commande de soupapes variable comprenant :
un système de came coulissante (26) présentant :
un support de came (34) coulissable axialement, qui présente pour la première soupape d'échange de gaz une première came (40) et une deuxième came (42) décalée axialement par rapport à celle-ci et pour la deuxième soupape d'échange de gaz une troisième came (44) et une quatrième came (46) décalée axialement par rapport à celle-ci, dans lequel :
en fonction d'une position axiale du support de came (34), soit la première came (40) est positionnée pour actionner la première soupape d'échange de gaz et la troisième came (44) est positionnée pour actionner la deuxième soupape d'échange de gaz, soit la deuxième came (42) est positionnée pour actionner la première soupape d'échange de gaz et la quatrième came (46) est positionnée pour actionner la deuxième soupape d'échange de gaz ;
la première came (40), la deuxième came (42), la troisième came (44) et la quatrième came (46) sont différentes d'une came à course zéro ;
la première came (40) et la troisième came (44) sont réalisées de manière identique ; et
la deuxième came (42) et la quatrième came (46) sont réalisées de manière différente.

2. Moteur à combustion interne (10) selon la revendication 1, présentant en outre :
des appareils de transmission de force séparés (24) pour relier de manière opérationnelle la première came (40) et la deuxième came (42) à la première soupape d'échange de gaz et pour relier de manière opérationnelle la troisième came (44) et la quatrième came (46) à la deuxième soupape d'échange de gaz.

3. Moteur à combustion interne (10) selon la revendication 1 ou la revendication 2, dans lequel :
un premier appareil de transmission de force (24) et/ou un deuxième appareil de transmission de force (24) présentent un dispositif de modification (28), notamment pouvant être mis en circuit, pour modifier une transmission d'un contour de came de la came respectivement reliée de manière opérationnelle.

4. Moteur à combustion interne (10) selon l'une quelconque des revendications précédentes, dans lequel :
un premier appareil de transmission de force (24) et/ou un deuxième appareil de transmission de force (24) présentent un dispositif de course à vide (28), notamment pouvant être mis en circuit, pour la compensation au moins partielle, notamment la compensation complète, d'une transmission d'un contour de came de la came respectivement reliée de manière opérationnelle.

5. Moteur à combustion interne (10) selon l'une quelconque des revendications précédentes, dans lequel :
la première came (40) et la troisième came (44) sont réalisées sous forme de cames de soupape d'échappement normal ; et/ou
la première came (40) et la troisième came (44) sont réalisées pour maintenir ouvertes la première soupape d'échange de gaz et la deuxième soupape d'échange de gaz pendant une phase d'échappement.

6. Moteur à combustion interne (10) selon l'une quelconque des revendications précédentes, dans lequel
la deuxième came (42) est réalisée pour maintenir fermée puis ouvrir la première soupape d'échange de gaz dans la phase de compression pour effectuer une décompression du gaz.

7. Moteur à combustion interne (10) selon l'une quelconque des revendications précédentes, dans lequel
la deuxième came (42) est réalisée pour maintenir ouverte au moins temporairement la première soupape d'échange de gaz dans la phase d'expansion pour l'aspiration du gaz.

8. Moteur à combustion interne (10) selon l'une quelconque des revendications précédentes, dans lequel
la quatrième came (46) est réalisée pour maintenir fermée puis ouvrir la deuxième soupape d'échange de gaz dans la phase d'échappement pour provoquer une décompression du gaz.

9. Moteur à combustion interne (10) selon l'une quelconque des revendications précédentes, dans lequel :
la deuxième came (42) et la quatrième came (46) effectuent, en se superposant l'une à l'autre, un fonctionnement de frein moteur, notamment avec une première décompression du gaz dans la phase de compression, une aspiration du gaz dans la phase d'expansion et/ou une deuxième décompression du gaz dans la phase d'échappement.

10. Moteur à combustion interne (10) selon l'une quelconque des revendications précédentes, dans lequel :
la quatrième came (46) et un dispositif de course à vide activé (28) pour compenser, notamment complètement, un contour de came de la deuxième came (42) effectuent un fonctionnement d'élévation de la température du gaz d'échappement, notamment avec une décompression du gaz dans la phase d'échappement.

11. Moteur à combustion interne (10) selon l'une quelconque des revendications précédentes, dans lequel la quatrième came (46) est réalisée pour ouvrir la deuxième soupape d'échange de gaz, et ce dans la phase d'échappement :
après une première moitié de la phase d'échappement ; et/ou
dans la plage comprise entre 120° KW avant OT et 40° KW avant OT ; et/ou
dans la plage comprise entre 100° KW avant OT et 60° avant OT ; et/ou
dans la plage comprise entre 90° KW avant OT et 70° avant OT ; et/ou
à 80° KW avant OT.

12. Moteur à combustion interne (10) selon l'une quelconque des revendications précédentes, dans lequel la quatrième came (46) est réalisée pour maintenir ouverte la deuxième soupape d'échange de gaz :
pour moins de 160° KW, 150° KW, 140° KW et/ou 130° KW ; et/ou
pour plus de 80° KW, 90° KW, 100° KW et/ou 110° KW ; et/ou
pour 120° KW.

13. Moteur à combustion interne (10) selon l'une quelconque des revendications précédentes, dans lequel la deuxième came (42) est réalisée pour ouvrir la première soupape d'échange de gaz, et ce dans la phase de compression :
après une première moitié de la phase de compression ; et/ou
dans la plage comprise entre 120° KW avant OT et 40° KW avant OT ; et/ou
dans la plage comprise entre 100° KW avant OT et 60° avant OT ; et/ou
dans la plage comprise entre 90° KW avant OT et 70° avant OT ; et/ou
à 80° KW avant OT.

14. Moteur à combustion interne (10) selon l'une quelconque des revendications précédentes, dans lequel la deuxième came (42) est réalisée pour maintenir ouverte la première soupape d'échange de gaz :
pour moins de 400° KW, 350° KW, 330° KW et/ou 310° KW ; et/ou
pour plus de 200° KW, 250° KW, 270° KW et/ou 290° KW ; et/ou
pour 300° KW.

15. Véhicule automobile, notamment véhicule utilitaire, avec un moteur à combustion interne (10) selon l'une quelconque des revendications précédentes.
